# EUROPEAN PATENT APPLICATION

(11) **EP 2 930 997 A1**
(43) Date of publication of application: **14.10.2015**
(21) Application number: 15152424.6
(22) Date of filing: 26.01.2015
(51) Int. Cl.: H04W 74/08, H04W 84/12

(54) **Methods and apparatus for wireless networking**

(30) Priority: 14.03.2014 US 201414211963
(71) Applicant: Nokia Corporation, 02610 Espoo (FI)
(72) Inventor: Choudhury, Sayantan, Berkeley, CA 94709 (US); Doppler, Klaus, Albany, CA 94706 (US)
(74) Representative: Nokia Corporation

(57) **Abstract**

Systems and techniques for managing interference in wireless networking environments. Stations waiting to transmit are controlled so as to avoid undue interference with transmitting stations - for example, by restricting the use of a higher CCA threshold or otherwise requiring deference. Low power transmitting stations may be identified so that a monitoring station will defer its transmission even if the transmitting station is not in the monitoring station's BSS. Alternatively or in addition, stations may be configured to manage behavior that has a higher interference potential - such as by restricting the duration for which a station may use a higher CCA threshold.

## Description

### FIELD OF THE INVENTION

The present invention relates generally to wireless communication. More particularly, the invention relates to systems and techniques for establishing channel sharing criteria in wireless local area networks.

### BACKGROUND

Wireless local area networking has become ubiquitous and the number of devices seeking access to wireless networks continues to increase. Network deployments are becoming denser and denser as the increasing numbers of smaller network-capable devices leads to the appearance in the same space of more and more devices and access points to serve them. Wireless networking devices may share frequency resources by sensing one another's transmissions and refraining from transmission if they sense transmission by other devices. As wireless network density has increased, new standards defining high efficiency wireless local area networks have begun to be developed.

### SUMMARY

In one embodiment of the invention, an apparatus comprises at least one processor and memory storing a program of instructions. The memory storing the program of instructions is configured to, with the at least one processor, cause the apparatus to at least control the operation of at least one monitoring wireless networking station so that the wireless networking station limits transmission when needed to allow fair channel access by at least one transmitting station outside of the basic service set of the at least one wireless networking station.

In another embodiment of the invention, an apparatus comprises at least one processor and memory storing a program of instructions. The memory storing the program of instructions is configured to, with the at least one processor, cause the apparatus to at least configure a signal field for transmission by a transmitting wireless networking station, wherein configuring the signal field comprises including an indication in the signal field that the transmitting wireless networking station is particularly susceptible to interference.

In another embodiment of the invention, a method comprises controlling the operation of at least one monitoring wireless networking station so that the wireless networking station limits transmission when needed to allow fair channel access by at least one transmitting station.

In another embodiment of the invention, a computer readable medium stores a program of instructions. Execution of the program of instructions by a processor configures an apparatus to perform actions comprising at least control the operation of at least one monitoring wireless networking station so that the wireless networking station limits transmission when needed to allow fair channel access by at least one transmitting station outside of the basic service set of the at least one wireless networking station.

These and other embodiments of the invention are described below with particularity.

### BRIEF DESCRIPTION OF THE DRAWINGS

Fig. 1 illustrates a wireless network deployment according to an embodiment of the present invention;
Fig. 2 illustrates a process according to an embodiment of the present invention;
Fig. 3 illustrates a management frame according to an embodiment of the present invention;
Fig. 4 illustrates a process according to an embodiment of the present invention; and
Fig. 5 illustrates elements for carrying out one or more embodiments of the present invention.

### DETAILED DESCRIPTION

Various embodiments of the present invention address problems that are recognized as associated with the proliferation of devices, particularly devices transmitting at different power levels. High efficiency WLAN may use a higher CCA threshold than previous implementations, and this higher threshold allows for greater channel re-use and thus higher throughput. In homogenous deployments, with most stations (STAs) having the same transmit power and being more or less equally distant from their access points (APs), such an approach provides for fair access and efficient channel use. However, as noted, with the increasingly varied power levels being served by wireless networks, an increased CCA threshold can lead to unfairness, with a lower power level device suffering interference because they are unable to be received at the increased CCA threshold and therefore prevent interfering transmissions from other stations. The susceptibility of a transmitting device to interference is usually detected by the ability of a device monitoring the channel to detect the transmitting device's signal field (SIG). If the SIG can be decoded, there is some chance of interference, depending on the actual power being used by the station whose SIG is decoded. The CCA threshold may be used to determine whether excessive interference is present, balancing the benefit to the monitoring device of being able to transmit against the detriment to the transmitting device.

Simulation results are presented below for a deployment in which standard power wireless networking (also known as Wi-Fi) devices coexist with lower power Wi-Fi devices, such as wearable devices.

The simulated deployment was as follows:
- 5 floor building with 10x2x5 apartments
- 30 randomly selected apartments have 1 AP and 2 STA
- AP transmit power (TxP) 23 dBm, STA TxP 16 dBm
- An additional 10 randomly selected apartments deploy a wearable network of 1 AP and 1 STA operating on the same channels as those above, with power as follows:
- AP TxP 0.5 dBm, STA TxP 0.5 dBm
- Maximum available load: 5 Mbps/link

The following table presents results:

**Average Throughput**

| DL (5Mbps) | 0dBm | 5dBm |
|---|---|---|
| Normal Wi-Fi Devices | 3.98 | 3.96 |
| Low Power Devices | 0.44 | 0.77 |
| UL (5Mbps) | 0dBm | 5dBm |
| Normal Wi-Fi Devices | 2.16 | 2.12 |
| Low Power Devices | 0.36 | 0.65 |

In addition to lower average throughput, 5% of the low power STAs have less than 100 kbps throughput. The simulations show that low power Wi-Fi devices are at a disadvantage and may not operate well in a dense environment with a high CCA threshold.

Prior-art wireless networking deployments have been based on the premise that the same CCA threshold is used for all devices. Deployments using a higher CCA threshold, the use of the same threshold may severely degrade the performance of low power devices.

Some embodiments provide mechanisms allowing a STA to indicate that it is particularly susceptible to interference or that it needs a higher than usual quality of service.

One or more embodiments provide mechanisms for managing channel use in ways that assure fairness to low power devices, as well as additional more precise ways to mange access in general. Such mechanisms may be designed for environments featuring inherently low power devices, or additionally by devices in poor signal to noise ratio (SINR) regions or by devices transmitting with higher order modulation, e.g. 256QAM, low error code correction or multiple spatial streams. Such mechanisms can control channel access, or can control when a higher CCA threshold can be used, or may control access more specifically, allowing an AP to refrain from channel access or to restrict access by its STAs when it is informed that a STA is suffering interference or needs special access to the channel.

In one exemplary approach, low power devices and devices operating in poor SINR regions or by devices transmitting with higher order modulation, for example, 256QAM, low error code correction or multiple spatial streams, can have an indicator (such as a 1-bit indicator) in the SIG. If the indicator is appropriately set, it provides an indication that limitations on use of the channel should be imposed. For example, use of the channel may be inhibited or a lower CCA threshold may need to be applied if the SIG is decoded.

In another exemplary approach, a device granting access controls the time when a higher CCA threshold can be used. A wireless network AP is discussed here as an example, but it will be recognized that any device exercising control over another device's channel use (such as a device in device-to-device communication may operate according to techniques described here.

In the case of an AP, the AP may indicate in a control/management frame whether its STAs can use a higher CCA threshold. The AP can also define the duration for which the CCA needs to be lowered. Alternatively or in addition, the AP may use an indicator to specify whether the CCA can be raised, so that a higher CCA threshold may be used when the indicator is set to allow it, while a lower CCA threshold must be used when the indicator is set to prevent use of the higher CCA threshold. The AP may also define a percentage of time or a maximum duration within a time interval (for example, a beacon interval) that can be used for transmissions with channel access based on higher CCA threshold. There may be a dedicated bit in the SIG field indicating transmissions based on channel access with higher CCA threshold.

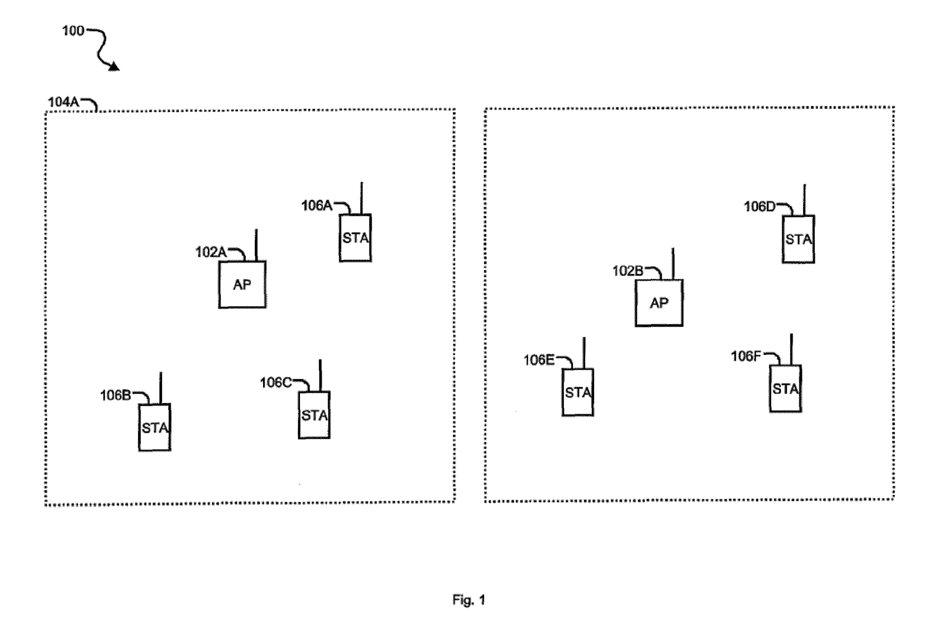

Fig. 1 illustrates a heterogeneous wireless network environment 100 comprising APs 102A and 102B serving networks 104A and 104B, respectively. The network 104B also comprises STAs 106A-106C, of which the STA 106A is normal power and 106B and 106C are low power, and the network 104B comprises STAs 106D-106F, of which the STAs 106D and 106E are normal power and 106F is low power. Measures are taken by various network elements to prevent unfair interference to low power APs and STAs. The exemplary network deployment implemented here operates under the IEEE 802.11ah standard, and various exemplary embodiments use a COLOR field, which in the present 802.11ah standard is described as follows:
"If a valid SIGA parity bit is indicated, and the UPLINK bit is 1 and the ID field value matches the PBSSID of the BSS of which the STA is a member or the UPLINK bit is 0 and the COLOR field value matches the COLOR indicated by the AP to which the STA is associated, then the S1G PHY shall maintain PHYCCA. indication (BUSY, channel-list) for the predicted duration of the transmitted PPDU, as defined by RXTIME in Equation (24-62), for all supported modes, unsupported modes, Reserved S1G-SIG-A Indication, invalid S1G-SIG-A CRC and invalid SIG-A Length field value. If a valid SIG-A parity bit is indicated, and the UPLINK bit is 1 and the ID field value does not match the PBSSID of the BSS of which the STA is a member or the UPLINK bit is 0 and the COLOR field value does not match the COLOR indicated by the AP to which the STA is associated, then the S1G PHY shall maintain PHYCCA.indication(BUSY, channel-list) for the predicted duration of the transmitted PPDU, as defined by RXTIME in Equation (24-62), for all supported modes, unsupported modes, Reserved S1G-SIG-A Indication, invalid S1G-SIG-A CRC and invalid SIG-A Length field value if the reception meets the minimum CCA sensitivity level specified in 24.3.18.5.4 (CCA sensitivity for signals occupying the Primary 2MHz and/or Primary 1MHz channel)."

IEEE 802.11-14.0082r0, provides additional explanation on the use of the COLOR field:
The underlying mode of operation uses the concept of BSS color introduced in 11ah:
   - Each BSS has a different color [field] that enables STA to know (with high probability) whether the transmission is within their BSS or not after decoding the SIG field.
   - Transmissions within the BSS are deferred to at the lowest possible level in order to on one hand side provide the lowest sensitivity and on the other hand side prevent intra-BSS multiple unsynchronized transmissions (which are bound to be unsuccessful)
   - Transmissions that are perceived to belong to an OBSS (different color) are deferred to based on the CCA value (in 11ah 3 values of CCA levels exist).

The procedures described above insure that transmissions with a basic service set (BSS) are protected, but a STA can override transmission from a neighboring BSS. As noted above, dense deployments may include numerous networks two or more of which are in range of one another, and if only transmissions within a BSS are protected, low power devices in neighboring BSSs will be disadvantaged.

Therefore, in one exemplary approach, low power devices and devices in high SINR regions use an indication that a device is operating at low power or is otherwise unusually susceptible to interference or is experiencing interference. One approach is to use a 1-bit indicator in the SIG, with the indicator suitably being called Low Power Bit. If an STA is able to decode the SIG, and the Low Power Bit is set, limitations are placed on its use of the channel, such as inhibition from using the channel or use of a lower CCA threshold. In another approach, an alternative sequence may be used that can be detected at a lower signal to noise ratio value than a SIG. If no indication of susceptibility to interference is present (for example, if the Low Power Bit is not set or if an indicator sequence does not indicate unusual susceptibility, limitations need not be imposed. For example, use of the channel might not be inhibited, or a higher CCA threshold might be allowed.

Three variant embodiments of this approach are as follows. In a first variant, an indicator following the COLOR field concept described in 802.11ah, may include or be accompanied by a low power indicator. In a second variant, a low power indicator is used without the use of the COLOR field concept. In a third variant, a modified version of the COLOR field concept is used, without a separate low power indicator.

In the first variant, the COLOR field is used, so that all STAs belonging to the same BSS set the same COLOR field. All STAs are thus aware that there is an ongoing intra-BSS transmission, so that the STA will not re-use the channel if it decodes a valid SIG field from the same BSS. The ability to decode a valid SIG field indicates that the device transmitting the field is likely close enough to cause or be affected by interference if the decoding device transmits. Inhibiting transmission when the SIG field is decoded keeps the channel clear for the transmitting device. However, under one set of rules governing the response to the COLOR field, a STA is able to use the channel without special restrictions (for example, being allowed to use a higher CCA threshold) if there is a transmission from an OBSS STA. The presence of an OBSS STA does not impose the same restrictions as would the presence of a STA in the "home" BSS.

Thus, an additional bit is defined in the SIG, so that if a low-power STA such as one of the STAs 108A-108E sets the bit, any STA that is able to decode its SIG should not re-use the channel (that is, should not use the channel while the other STA is transmitting). The ability to decode the SIG is aware that the channel is being used, and therefore in an expansion of this approach, the bit can also be made available for use by normal power STAs such as the STAs 106A-106C, and can be expanded for use beyond that of an indication that a STA is a low-power STA. For example, the bit can be set to indicate that the STA has been experiencing interference, or that a transmission is particularly important and should therefore receive a higher quality if service (QoS). Through the use of the low-power bit, an STA can autonomously and dynamically indicate that its transmissions need to be protected from OBSS transmission.

In order to be implemented in 802.11 ah, this approach may require an amendment to the 802.11 standard. Such an amendment may be (for example) as follows:
"If a valid SIGA parity bit is indicated, and the UPLINK bit is 1 and the ID field value matches the PBSSID of the BSS of which the STA is a member or the UPLINK bit is 0 and the COLOR field value matches the COLOR indicated by the AP to which the STA is associated **or the Low Power Bit is set to 1,** then the S1G PHY shall maintain PHYCCA. indication (BUSY, channel-list) for the predicted duration of the transmitted PPDU, as defined by RXTIME in Equation (24-62), for all supported modes, unsupported modes, Reserved S1G-SIG-A Indication, invalid S1G-SIG-A CRC and invalid SIG-A Length field value."

In a second exemplary variant, a COLOR field is not used, and a low power indicator is used to indicate to all other STAs that they should refrain from using the channel if they are able to decode the SIG field. This approach allows both intra BSS and OBSS protection, but does not allow a STA to set intra BSS protection without setting OBSS protection, or vice versa. If every STA sets the low-power bit to 1, re-use of the channel will be limited - by inhibiting use of the channel or by requiring a low-power threshold. Thus, in one or more embodiments of the invention, a system configured according to this second variant may employ rules specifying when the low power bit is to be set - for example, that only certain QoS packets are able to set the bit, that the bit can be set only if the packet is larger than a certain size, that the bit can be set only if a specified percentage of past transmissions have been unsuccessful, or other appropriate rules.

In a third exemplary variant, the COLOR field concept can be generalized to achieve the functionality of both the low power indicator and the COLOR field as defined by 802.11ah. For example, the first three bits of the COLOR bit can be used to set the basic service set identification (BSS ID) and the fourth bit can be used as a low power/high interference indicator. To take a more general view, the fourth bit may be seen simply as an indicator defining channel access. It can be set or cleared based on whatever appropriate criteria are desired, and may constitute a command to defer or allow access to a channel, not a specific indicator of device characteristics. It will be recognized, however, that the bit can be set for a low power device or a device causing or experiencing high interference so that it actually does serve as an indicator of device capability and network capacity can be defined to indicate network conditions or device characteristics. In addition or as an alternative, reserved values may be used for the entire 4-bit field. For example, 1111 may be used for low power devices or 0000 may be used for high interference devices. Every STA that could successfully decode these values could be required to defer channel access. The following table shows the functionality of the combined COLOR bit and low power indicator.

| COLOR Field | Low Power/High Interference Indicator | Receiving STA |
|---|---|---|
| Not used | 1 | Limit Access |
| Not used | 0 | Allow Access |
| STA in same BSS (that is, same COLOR field as receiving STA | 0 or 1 | Limit Access |
| STA in different BSS (different COLOR field from receiving STA) | 0 | Allow Access |
| STA in different BSS (different COLOR field from receiving STA) | 1 | Limit Access |

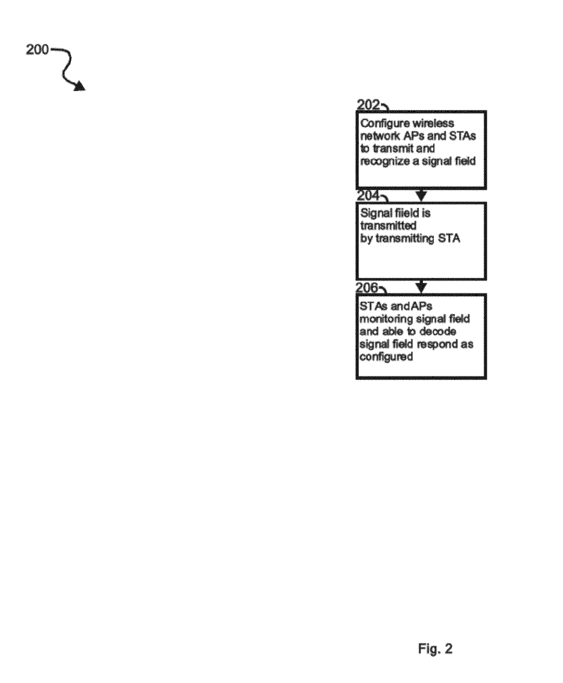

Fig. 2 illustrates a process 200 according to an embodiment of the present invention. At block 202, one or more wireless network APs and STAs are configured to transmit and to recognize a signal field. The signal field includes indications specifying whether a STA monitoring the signal field is to be allowed channel access or to defer channel access if it can decode the signal field. The indications may include a COLOR field identifying the BSS of the transmitting STA, which may be accompanied by a low power/high interference bit, or which may be unaccompanied by a low power/high interference bit and may be configured to both identify the BSS of the transmitting station and indicate whether the STA is a low power STA or is experiencing high interference, or otherwise needs for other STAs to limit access. The indications may also include a low power/high interference bit unaccompanied by a COLOR field. The APs and STAs may be configured with rules specifying conditions under which the low power/high interference bit is to be set, particularly when it is unaccompanied by a COLOR field. The APs and STAs are configured to respond appropriately to the signal field when able to decode it - for example, by deferring access or using a standard or lower CCA threshold rather than a high CCA threshold when the SIG indicates that a STA needs such deference.

At block 204, the signal field is transmitted by a transmitting STA, and at block 206, APs and STAs monitoring the transmission channel being used decode the signal field and, if able to decode the field exercise or defer access to the channel based on the indications in the field and their configurations.

As an alternative to using an indicator for when channel re-use or a higher CCA threshold is and is not allowed, one or more embodiments of the invention may define conditions to provide fairness by allowing an AP or STA to limit how much of its time may be used for a higher CCA threshold. For example, signaling may be implemented to allow for a scheduled allocation for a subset of STAs based on the CCA threshold. The use of a higher or lower CCA threshold may be determined based on factors such as packet size or quality of service. A duration may be specified, defining the length of time a higher CCA threshold is permitted, or a total percentage of time during which a higher CCA threshold is permitted may be specified. In one or more embodiments of the invention, an STA may autonomously decide when to use a higher or lower CCA. In alternative or additional embodiments of the invention, a scheduling mechanism may enforce rules relating to the use of a higher CCA threshold. Scheduling may be defined, for example, in a scheduling allocation frame, a beacon, or in any management frame.

As an alternative or in addition to specifying conditions for channel access by explicit signals from STAs about whether or not they need access to be deferred or need other STAs to refrain from using a higher threshold, the AP may control time and duration of access. Alternatively, STAs may be configured to control their own channel access, inhibiting themselves from channel re-use or use of a higher CCA threshold for more than a specified time.

In one or more embodiments of the invention, therefore, an AP enforces rules as to which an STA is able to operate with a higher CCA and when it should operate with a lower CCA. Any number of criteria may be used for selecting a CCA value or otherwise allowing or inhibiting channel re-use. Criteria may be based on the observation that there is a fundamental tradeoff between increasing channel re-use (by increasing the CCA value or through another mechanism) and the increased OBSS interference caused by such channel re-use. Rather than depend on specially coded signals indicating an STAs requirements or susceptibility to interference, the AP may act autonomously, for example through its own sensing of conditions or according to a preprogrammed schedule. If an AP senses interference from OBSS transmissions, it may lower the CCA threshold, or reduce the duration of use of a higher rather than a lower threshold, in order to avoid interfering with the OBSS devices, on the theory that if the AP can sense OBSS transmissions, the OBSS devices are likely to be within a range that they can suffer interference from the AP. As an alternative or in addition, if the AP senses, or is otherwise aware, that there are low power OBSS STAs, or legacy STAs that always use a lower CCA threshold, the AP can adjust the time that a higher versus a lower CCA threshold is used, or make other adjustments to avoid overuse of the channel.

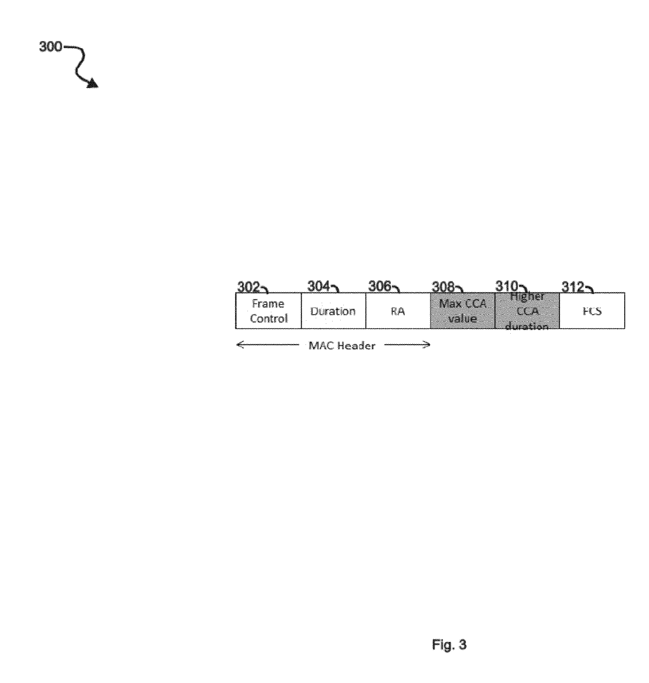

Fig. 3 illustrates a management/control frame 300 according to an embodiment of the present invention. The frame 300 includes a media access control (MAC) header, including frame control, duration, and receiver address (RA) fields 302, 304, and 306, respectively. The frame 300 further includes field 310 specifying a maximum CCA threshold to be used, and field 312, specifying the duration for which the higher CCA threshold is to be used. The frame 300 further includes a frame check sequence (FCS) field 314. An AP can broadcast this frame to all STAs it controls and the STAs will respond accordingly. The AP thus assures that a lower CCA will be used outside the duration specified for the high CCA threshold, giving low-power STAs a fair chance at the channel outside of that time.

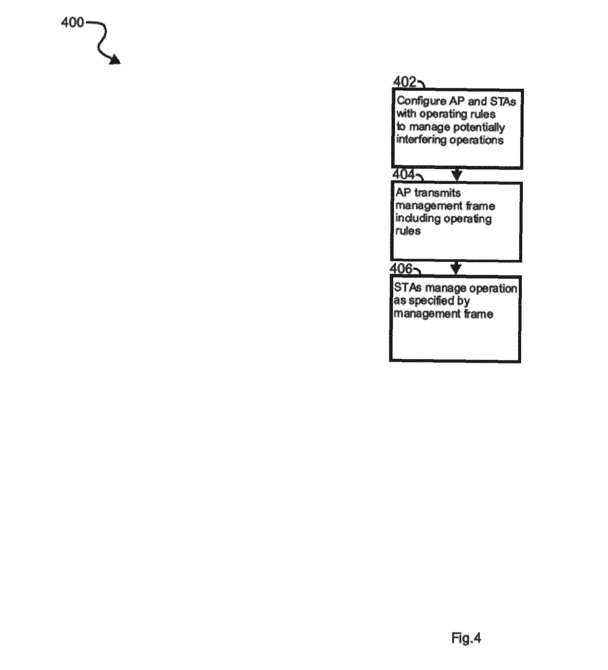

Fig. 4 illustrates a process 400 according to an embodiment of the present invention. At block 402, an AP and STAs are configured with operating rules to manage operation that may interfere with other STAs, particularly low power STAs in BSSs outside their own BSS. For example, an AP may be configured to5 transmit a management frame specifying a maximum CCA threshold and a duration for which a higher rather than a lower threshold may be used. At block 504, the AP transmits the management frame and at block 406 the STAs manage their transmission as specified by the management frame.

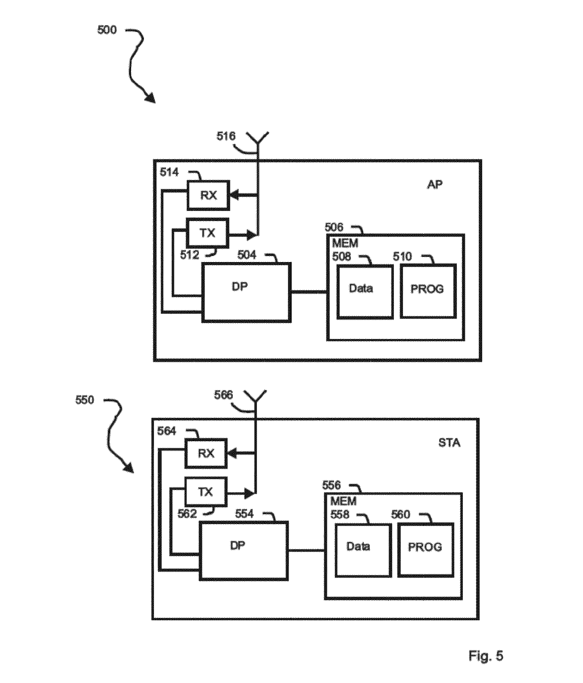

Reference is now made to Figure 5 for illustrating a simplified block diagram of an AP 500 and a STA 550, suitable for use in practicing exemplary embodiments of this invention. The AP 400 includes processing means such as at least one data processor (DP) 504, storing means such as at least one computer-readable memory (MEM) 506 storing data 508 and at least one computer program (PROG) 510 or other set of executable instructions, as well as communicating means such as a transmitter TX 512 and a receiver RX 514 for bidirectional wireless communications with the STA 550 via one or more antennas 516.

The STA 550 includes processing means such as at least one data processor (DP) 554, storing means such as at least one computer-readable memory (MEM) 556 storing data 558 and at least one computer program (PROG) 560 or other set of executable instructions, communicating means such as a transmitter TX 562 and a receiver RX 564 for bidirectional wireless communications with the AP 500 via one or more antennas 566.

At least one of the PROGs 510 in the AP 500 is assumed to include a set of program instructions that, when executed by the associated DP 504, enable the device to operate in accordance with the exemplary embodiments of this invention, as detailed above. In these regards the exemplary embodiments of this invention may be implemented at least in part by computer software stored on the MEM 506, which is executable by the DP 504 of the STA 550, or by hardware, or by a combination of tangibly stored software and hardware (and tangibly stored firmware). In these regards the exemplary embodiments of this invention may be implemented at least in part by computer software stored on the MEM 566, which is executable by the DP 564 of the STA 550, or by hardware, or by a combination of tangibly stored software and hardware (and tangibly stored firmware). Electronic devices implementing these aspects of the invention need not be the entire devices as depicted at Figure 1 or Fig. 5 or may be one or more components of same such as the above described tangibly stored software, hardware, firmware and DP, or a system on a chip SOC or an application specific integrated circuit ASIC.

In general, the various embodiments of the STA 550 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEM 506 and 556, include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DP 504, and 554 include but are not limited to general purpose computers, special purpose computers, microprocessors, digital signal processors (DSPs) and multi-core processors.

Various modifications and adaptations to the foregoing exemplary embodiments of this invention may become apparent to those skilled in the relevant arts in view of the foregoing description. While various exemplary embodiments have been described above it should be appreciated that the practice of the invention is not limited to the exemplary embodiments shown and discussed here.

Further, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

## Claims

1. An apparatus comprising:
at least one processor;
memory storing a program of instructions;
wherein the memory storing the program of instructions is configured to, with the at least one processor, cause the apparatus to at least:
control the operation of at least one monitoring wireless networking station so that the wireless networking station limits transmission when needed to allow fair channel access by at least one transmitting station outside of the basic service set of the at least one wireless networking station.

2. The apparatus of claim 1, wherein controlling the operation of the at least one wireless networking station comprises controlling a clear channel access threshold used by the at least one wireless networking station.

3. The apparatus of any preceding claim 1 to 2, wherein controlling the operation of the at least one monitoring wireless networking station comprises refraining from transmission in response to receiving an indication that the at least one transmitting wireless networking station is particularly susceptible to interference.

4. The apparatus of claim 3, wherein the indication that the at least one transmitting wireless networking station is particularly susceptible to interference includes one or more of an indication that the station is a lower power station, an indication that the station is experiencing high interference, or an indication that the station needs a higher quality of service.

5. The apparatus of claim any preceding claim 1 to 4, wherein controlling the operation of the at least one monitoring network station comprises specifying a duration during which the monitoring network station is allowed to use a higher clear channel access threshold.

6. The apparatus of claim 3 or 4, wherein the indication is included in a signal field transmitted by the transmitting wireless networking station.

7. An apparatus comprising:
at least one processor;
memory storing a program of instructions;
wherein the memory storing the program of instructions is configured to, with the at least one processor, cause the apparatus to at least:
configure a signal field for transmission by a transmitting wireless networking station, wherein configuring the signal field comprises including an indication in the signal field that the transmitting wireless networking station is particularly susceptible to interference.

8. The apparatus of claim 7, wherein configuring the signal field for transmission comprises including an identifier of the basic service set to which the transmitting wireless networking station belongs.

9. A method comprising:
controlling the operation of at least one monitoring wireless networking station so that the wireless networking station limits transmission when needed to allow fair channel access by at least one transmitting station.

10. The method of claim 9, wherein the at least one transmitting station is associated with a basic service set of the at least one monitoring wireless networking station or to another basic service set.

11. The method of any preceding claim 9 to 10, wherein controlling the operation of the at least one wireless networking station comprises controlling a clear channel access threshold used by the at least one wireless networking station.

12. The method of any preceding claim 9 to 11, wherein controlling the operation of the at least one monitoring wireless networking station comprises refraining from transmission in response to receiving an indication that the at least one transmitting wireless networking station is particularly susceptible to interference.

13. The method of claim 12, wherein the indication that the at least one transmitting wireless networking station is particularly susceptible to interference includes one or more of an indication that the station is a lower power station, an indication that the station is experiencing high interference, or an indication that the station needs a higher quality of service.

14. The method of any preceding claim 9 to 13, wherein controlling the operation of the at least one monitoring network station comprises specifying a duration during which the monitoring network station is allowed to use a higher clear channel access threshold.

15. A computer readable medium storing a program of instructions, execution of which by a processor configures an apparatus to at least:
control the operation of at least one monitoring wireless networking station so that the wireless networking station limits transmission when needed to allow fair channel access by at least one transmitting station outside of the basic service set of the at least one wireless networking station.
